# EUROPÄISCHE PATENTSCHRIFT

(11) **EP 0 550 514 B1**
(45) Veröffentlichungstag und Bekanntmachung des Hinweises auf die Patenterteilung: **06.04.1994**
(21) Anmeldenummer: 91916577.9
(22) Anmeldetag: 26.09.1991
(51) Int. Cl.: G06K 19/06, G07G 1/00

(54) **DURCH EINEN RECHNER STEUERBARES GERÄT**
COMPUTER-CONTROLLABLE APPARATUS
APPAREIL COMMANDE PAR ORDINATEUR

(30) Priorität: 26.09.1990 DE 4030456; 26.09.1990 DE 4030455
(43) Veröffentlichungstag der Anmeldung: 14.07.1993
(73) Patentinhaber: Siemens Nixdorf Informationssysteme Aktiengesellschaft, 33102 Paderborn (DE)
(72) Erfinder: BAITZ, Günter, D-1000 Berlin 27 (DE); BURCHART, Joachim, D-4797 Schlangen (DE)
(74) Vertreter: Fuchs, Franz-Josef, Dr.-Ing.
(86) Internationale Anmeldenummer: EP9101832
(87) Internationale Veröffentlichungsnummer: WO9205520

(56) Entgegenhaltungen:
- EP-A- 0 014 654
- EP-A- 0 072 370
- EP-A- 0 247 623
- EP-A- 0 385 022
- EP-A- 0 386 994
- US-A- 4 220 991

## Beschreibung

Die vorliegende Erfindung betrifft ein durch einen Rechner steuerbares Gerät der im Oberbegriff des Anspruches 1 genannten Art.

Es sind bereits Chip-Karten bekannt, die Speicherbausteine und Prozessorbausteine enthalten (siehe ISO-Standard 7816). Diese wirken im allgemeinen mit der Steuerung zusammen, indem sie beispielsweise einerseits bestimmte Informationen an die Steuerung abgeben und andererseits Informationen von der Steuerung übernehmen und abspeichern. Der Prozessor hat dabei nur die Aufgabe, den Speicherbaustein zu steuern. Er hat nach außen keine Steuerwirkung.

Durch die DE 38 06 771 A1 ist bereits ein Gerät der im Oberbegriff des Anspruches 1 genannten Art bekannt, welches zur Durchführung von Zahlungen auf elektronischem Wege dient. Als Chip-Karten sind beispielsweise eine Karte des Geschäftsmannes vorgesehen, welcher das Gerät betreibt, und die Karte eines Kunden, welcher eine Zahlung an den Geschäftsmann durchführen will. Bei dem bekannten Gerät ist die Steuerung Bestandteil des Gerätes und ist in diesem mehr oder weniger fest installiert. Bisher ist eine solche Steuerung in herkömmlicher Weise durch eine oder mehrere Steuerungsplatinen gebildet, die in entsprechend aufwendigen Baugruppenträgern montiert und über vielpolige Kontaktleisten mit der Leistungselektronik bzw. der Stromversorgung des Gerätes verbunden sind. Diese herkömmliche Bauweise ist verhältnismäßig aufwendig und voluminös. Insbesondere sind derartig konventionell aufgebaute Geräte aber auch sehr unflexibel, da ein Austausch der Steuerungsplatinen mehr oder weniger einer Demontage des Gerätes gleichkommt und im allgemeinen nicht ohne Entfernen von Gehäuseteilen möglich ist.

Es ist die Aufgabe der vorliegenden Erfindung, ein Gerät der im Oberbegriff des Anspruches 1 genannten Art zu schaffen, welches baulich einfacher und kleiner ist und welches steuerungsseitig einfacher und auch durch nicht geschulte Kräfte umrüstbar ist.

Diese Aufgabe ist erfindungsgemäß durch die im Anspruch 1 beschriebenen Merkmale gelöst.

Erfindungsgemäß sind nicht nur Chip-Karten vorgesehen, die mit einer im Gerät fest installierten Steuerung zusammenwirken; vielmehr ist auch die Steuerung selbst als Chip-Karte ausgebildet. Unter Chip-Karten sind hier Speicher- und/oder IC-Karten verstanden, wie sie etwa im ISO-Standard 7816 definiert sind. Derartige Chip-Karten enthalten integrierte Schaltkreise hoher Baudichte, so daß sie beispielsweise im Format von Scheckkarten hergestellt und entsprechend leicht von jedermann beispielsweise in der Brieftasche transportiert werden können. Zur Aufnahme derartiger Karten dienen Aufnahmevorrichtungen, in die die Karten im allgemeinen eingesteckt oder eingelegt werden, ohne daß dabei wie im Falle von Schaltungsplatinen eine genaue Ausrichtung zu Steckerleisten zu beachten und mehr oder weniger große Steckkräfte zu überwinden sind.

Mit der erfindungsgemäßen Verwendung von Chip-Karten auch für die zentrale Steuerung von Geräten ist die Möglichkeit geschaffen, daß derartige Geräte in einfacher Weise vom Benutzer selbst umgerüstet oder etwa im Falle eines Steuerungsausfalls repariert werden. Außerdem kann es sinnvoll oder nützlich sein, das Gerät durch Entnahme der Rechnerkarte außer Betrieb setzen zu können, etwa um unbefugten Gebrauch des Gerätes zu verhindern. Auch diese Möglichkeit wird durch die Verwendung einer einfachen Chip-Karte für die Steuerung sehr erleichtert.

Die Rechnerkarte enthält wenigstens eine zentrale Prozessoreinheit (CPU), einen Lesespeicher (ROM) zur Speicherung von Programmen, einen Arbeitsspeicher (RAM) und einen Ein-/Ausgabebaustein (I/O-Baustein), so daß er bis auf die Leistungselektronik und die Stromversorgung alle wesentlichen Elemente einer programmierbaren Steuerung aufweist.

Die Leistungs- und Treiberelektronik sowie die Stromversorgungseinheit sind vorzugsweise fest im Gerät installiert; es handelt sich dabei im allgemeinen um große und schwere Bauteile, die nicht auf einer derartigen Chip-Karte untergebracht werden sollten, um deren Vorteile einer kleinen und leichten Bauweise nicht zu schmälern. Die Aufnahmevorrichtung hat Verbindungskontakte, über die die eingelegte Chip-Karte mit der Leistungs- und Treiberelektronik verbindbar ist.

In einer weiteren Ausgestaltung der Erfindung weist das Gerät weitere Aufnahmevorrichtungen zur Aufnahme weiterer, mit der Rechner-Chip-Karte zusammenwirkender Chip-Karten auf; diese weiteren Aufnahmevorrichtungen sind jeweils mit Kontaktanordnungen versehen, die mit der Aufnahmevorrichtung der Rechner-Chip-Karte verbunden sind. Beim Einstecken weiterer Chip-Karten werden diese automatisch mit der Rechner-Chip-Karte verbunden.

Wenn an das Gerät Peripheriegeräte anschließbar sind, so kann gemäß einer weiteren Ausgestaltung der Erfindung vorgesehen sein, daß wenigstens einzelne Aufnahmevorrichtungen für jeweils eine der weiteren Chip-Karten eine Kontaktanordnung aufweisen, die direkt mit einem der Peripheriegeräte verbunden ist. Auf diese Weise kann erreicht werden, daß einzelne der weiteren Chip-Karten nicht direkt mit der Steuerung zusammenwirken können, sondern lediglich die zu dem betreffenden Peripheriegerät gelangenden Daten registrieren können. Ein Anwendungsbeispiel für diesen Fall wird in einem Ausführungsbeispiel beschrieben.

In einer weiteren Ausgestaltung der Erfindung sind den Aufnahmevorrichtungen für die Chip-Karten jeweils Mittel zum Sichern der Chip-Karten gegen Entnahme zugeordnet. Diese Sicherungsmittel verhindern einerseits, daß die Chip-Karten beispielsweise bei transportablen, Erschütterungen ausgesetzten Geräten aus den Ausnahmevorrichtungen fallen. Außerdem können die Sicherungsmittel so ausgestaltet sein, daß einzelne oder alle Karten nur von jeweils befugten Personen installiert bzw. entnommen werden können. Dabei kann auch vorgesehen sein, daß unterschiedliche Aufnahmevorrichtungen unterschiedlich stark gesichert sind, wie in einem Ausführungsbeispiel genauer beschrieben wird.

Bei einem Ausführungsbeispiel der vorliegenden Erfindung ist das Gerät als Registrierkasse ausgebildet, wobei eine der weiteren, mit der Rechnerkarte zusammenwirkenden Chip-Karten Daten zum Identifizieren und Anmelden einer Kassierperson sowie zum Einschalten der Betriebsfunktion der Registrierkasse trägt (Firmenkarte). Die Kassierperson meldet sich durch Einlegen einer ihr zugeordneten Firmenkarte bei der Kasse an. Das ist einerseits einfacher als die bisher übliche Anmeldung über eine Eingabetastatur, andererseits werden Eingabefehler ausgeschlossen.

In einer weiteren Ausgestaltung des als Registrierkasse ausgebildeten Gerätes ist eine weitere Chip-Karte vorgesehen, die Daten zum Identifizieren eines den Kassierpersonen übergeordneten Geschäftsführers trägt und zum Speichern und Verarbeiten von für den Geschäftsführer relevanten Daten ausgelegt ist (Geschäftsführerkarte). Diese Geschäftsführerkarte bleibt beispielsweise während des ganzen Geschäftstages im Gerät und registriert alle Aktionen unterschiedlicher Kassierer. Am Ende des Geschäftstages kann der Geschäftsführer die ihm zugeordnete Chip-Karte entnehmen und die seine Registrierkasse betreffenden Daten auswerten.

In einigen europäischen Ländern schreibt das Gesetz vor, daß bei Registrierkassen gesonderte, nicht manipulierbare Fiskalspeicher vorgesehen werden, die fiskalisch relevante Daten speichern. Gemäß einer weiteren Ausgestaltung des erfindungsgemäßen, als Registrierkasse ausgebildeten Gerätes ist deshalb vorgesehen, daß eine der weiteren Chip-Karten fiskalisch relevante Daten trägt und speichert.

Die Sicherungen für die Firmenkarte, die Geschäftsführerkarte und den Fiskalspeicher sind in der oben beschriebenen Weise unterschiedlich stark, so daß beispielsweise die Firmenkarte nur gegen Herausfallen gesichert ist, die Geschäftsführerkarte zusätzlich durch eine abschließbare Sperreinrichtung gesichert ist und der Fiskalspeicher schließlich weitere Sicherungen sowie gegebenenfalls eine Plombe aufweist, die nur von autorisierten Personen geöffnet werden darf.

Weitere Einzelheiten, Vorteile und Merkmale ergeben sich aus den Ansprüchen, der Beschreibung und der Zeichnung, auf die bezüglich der Offenbarung aller nicht im Text beschriebenen Einzelheiten ausdrücklich verwiesen wird. In der Zeichnung sind verschiedene Ausführungsbeispiele der Erfindung dargestellt, die im folgenden näher beschrieben werden. Es zeigen:
- Fig. 1: ein Blockschaltbild für ein Gerät mit einer als Chip-Karte ausgebildeten Steuerung;
- Fig. 2: eine Aufnahmevorrichtung zur Aufnahme mehrerer Chip-Karten;
- Fig. 3 bis 5: eine Kassenlade für eine Registrierkasse mit einer Aufnahmevorrichtung für eine Chip-Karte.

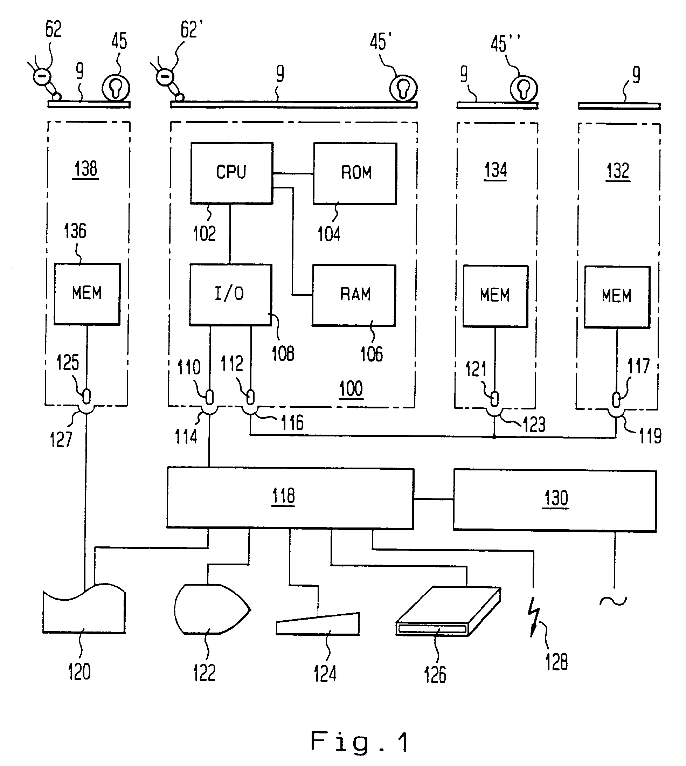

In der Figur 1 ist eine Registrierkasse in Blockdarstellung gezeigt. Die Steuerungselektronik ist auf einer Chip-Karte 100 angeordnet. Diese enthält eine CPU 102, die in an sich für Datenverarbeitungsanlagen bekannter Weise mit einem ROM-Speicher 104 für Programme, einem Arbeitsspeicher 106 und einem Ein-/Ausgabebaustein 108 zusammenarbeitet. Wenigstens der Ein-/Ausgabebaustein 108 ist über eine Anzahl von Kantensteckern 110, 112 der Chip-Karte 100 mit Gegenkontakten 114, 116 einer nicht dargestellten Schiebeführung steckverbunden.

An den Ein-/Ausgabebaustein ist über die Kontaktgruppe 110, 114 eine Leistungs- oder Treiberelektronik 118 angeschlossen, die an sich bekannte Ansteuerschaltungen für die Elektromechanik eines Kassendruckers 120, von Kunden- und Bediener-Anzeigegeräten 122, Kunden- und Bediener-Tastaturen 124, einer Geldlade 126, eine Datenübertragungseinrichtung 128 und andere an einer Kasse gebräuchliche Peripherie wie Strichcode-Kreditkartenleser enthält.

Ein Stromversorgungsgerät 130 versorgt die Leistungs- und Treiberelektronik 118 mit den erforderlichen Spannungen, die von dort auch an die Peripherie 120 bis 128 und an die Chip-Karte 100 weitergeleitet wird.

An den Ein-/Ausgabebaustein 108 der Chip-Karte 100 sind über die Kontaktgruppenpaare 112, 116 eine Firmenkarte 132, über die Kontakte 112, 116 und 121, 123 eine Geschäftsführerkarte 134 angeschlossen. Eine einen Memory-Fiscal-Speicher 136 tragende Chip-Karte 138 ist über Kontakte 125, 127 direkt an den Drucker 120 angeschlossen, um z.B. dem italienischen Gesetz zu genügen. Auf diese Weise speichert die Chip-Karte 138 alle Daten, die auch für den Ausdruck bestimmt sind. Die Leistungsversorgung erhält die Chip-Karte 138 ebenfalls über den Drucker 120, so daß jede direkte Verbindung zu anderen Steuerungskomponenten vermieden ist.

In der Figur 1 ist symbolisch dargestellt, daß die Chip-Karten 100, 132, 134, 138 unterschiedlich durch den jeweiligen Riegel 9 in ihren Schiebeführungen gesichert sind. Die die Steuerelektronik tragende Chip-Karte 100 wird durch ein Schloß 45' und eine Plombe 62' vor unbefugter Entnahme geschützt. Die Plombe 62' kann im vorliegenden Fall nur durch den Kundendiensttechniker des Kassenherstellers gelöst und gesetzt werden. Damit sind Manipulationen an der bzw. das Austauschen der Karte 100 ausgeschlossen. Dies kann für Garantieansprüche wichtig sein. Es kann jedoch auch vorgesehen sein, daß der Benützer des Gerätes die Möglichkeit hat, die Rechner-Chip-Karte 100 selbst zu entnehmen, um beispielsweise das Gerät außer Funktion zu setzen, es rechnerseitig anders zu konfigurieren, es zu reparieren usw..

Die Firmenkarte 132 ist lediglich durch ihren Riegel 9 gehalten, die Geschäftsführerkarte 134 ist durch ihren mit einem Schloß 45'' versehenen Riegel 9 gegen Entnahme geschützt. Die Memory-Fiscal-Karte ist durch ein Schloß 45 und zusätzlich durch eine Plombe 62 geschützt, die z.B. nur von einem Beauftragten des Finanzministeriums gelöst werden darf.

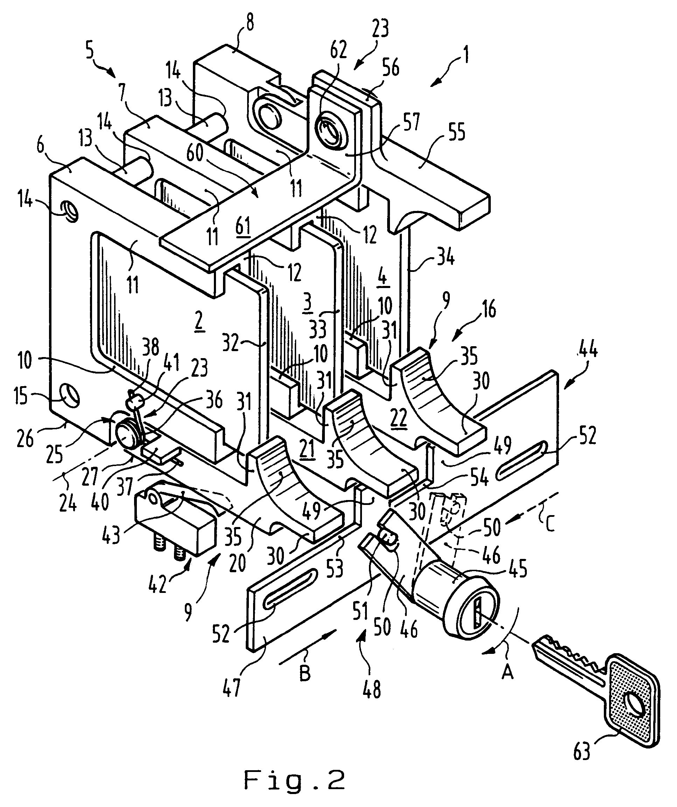

Figur 2 zeigt eine schematische perspektivische Darstellung einer Vorrichtung zum Aufnehmen von unterschiedlich gesicherten Karten. Die bei diesem Ausführungsbeispiel verwendeten Bezugszeichen 9, 45 und 62 entsprechen dabei den in Figur 1 verwendeten Bezugszeichen 9, 45, 45', 45'', 62 und 62' sinngemäß.

In der Figur 2 ist eine Vorrichtung 1 zum Aufnehmen von kartenförmigen Schaltungsträgern, insbesondere Karten 2,3 und 4 wie "integrated circuit cards with contacts" nach dem ISO-Standard 7816, aber auch solchen Karten mit kontaktloser Signalankoppelung, schematisch dargestellt, die unterschiedlich stark gesichert sind. Die Karten können als sogenannte Memory-Karten ausgebildet sein. Die Vorrichtung 1 hat einen Halter 5 mit drei Schiebeführungen oder Rahmen 6, 7, und 8, die gemäß der Figur 2 jeweils eine mit einer Ausnehmung 10 versehene linke Seitenwand 11 haben und schlitzförmig ausgebildet sind. Die in der Figur 2 nicht näher dargestellte rechte Seitenwand 12 kann ähnlich wie die linke Seitenwand 11 ausgebildet sein oder eine durchgehende Seitenfläche aufweisen. In der durchgehenden Seitenfläche kann nahe ihrer in Steckrichtung hinteren Kante eine nicht gezeigte bogenförmige Ausnehmung zum besseren Ergreifen einer Karte vorgesehen sein.

Gemäß der Figur 2 sind die Rahmen 6, 7 und 8 des Halters 5 miteinander über einen nicht dargestellten Gewindebolzen verbunden, der durch eine Bohrung 14 hindurchgeführt ist, die am in Steckrichtung vorderen, oberen Ende jedes Rahmens vorgesehen ist. Jeweils zwischen zwei Rahmen ist auf den Gewindebolzen ein Abstandhalter 13 aufgesetzt, der die Rahmen zueinander parallel und auf Abstand hält. Ein weiterer Gewindebolzen kann auch an dem in Steckrichtung vorderen, unteren Ende jedes Rahmens vorgesehen (nicht näher gezeigt) und in eine entsprechende Bohrung 15 eingesetzt sein. Für eine bessere Seitenstabilität im vorderen Bereich können die Rahmen des Halters auch an ihrem in Steckrichtung hinteren Ende miteinander verbunden sein (nicht dargestellt), wobei solche Halterungen bzw. Abstandshalter sowohl am in der Figur 2 oberen als auch unteren Ende jedes Rahmens, aber auch ausschließlich oben oder unten angebracht sein können. Mit Hilfe der Gewindebolzen und Abstandshalter 13 können also beliebig viele Rahmen nebeneinander und parallel zueinander zu einem kompakten Halter 5 verbunden werden. Die Verschraubungen können aber auch in einem Bereich zwischen dem in Steckrichtung vorderen und hinteren Ende des jeweiligen Rahmens angebracht sein.

Gemäß der Figur 2 befinden sich die Karten 2, 3 und 4 in den Rahmen 6, 7, und 8, wobei die Vorrichtung 1 außerdem eine als Halteeinrichtung ausgebildete Verriegelungseinrichtung 16 hat, mit deren Hilfe die Karten in der schlitzförmigen Schiebeführung zum Zwecke des Festlegens ihrer eingeschobenen Betriebsstellung gehalten und gegen eine Entnahme gesichert sind. Die Verriegelungseinrichtung 16 hat gemäß der Figur 2 drei insgesamt mit 9 bezeichnete Riegel 20, 21, 22, die jeweils aus einer die Karte in ihrer Betriebsstellung blockierenden Verriegelungs- in eine Entriegelungsstellung und umgekehrt bewegbar und mit Hilfe einer Haltevorrichtung 23 in ihrer Verriegelungsstellung (siehe Figur) gehalten sind. Die Haltevorrichtung 23 kann auch entfallen, wenn der jeweilige Riegel z.B. aus einem elastischen Material besteht und fest mit seiner Schiebeführung verbunden bzw. einstückig mit dieser ausgebildet oder infolge der Schwerkraft in seiner Verriegelungsstellung gehalten ist. Bei dieser Ausführungsform ist der Riegel vorzugsweise an der Oberseite des Halters befestigt.

Jeder Riegel der Verriegelungseinrichtung 16 ist ein parallel zur Steckrichtung der Karte 2, 3, 4 sich erstreckender, in der durch die Kartenebene definierten Ebene um eine Schwenkachse 24 schwenkbarer Hebel 20, 21, 22. Jeder Hebel 20, 21, 22 ist unterhalb des Rahmens 6, 7, 8 derart am Halter 5 gelagert, daß er in einer Ausnehmung 25 des Rahmens angeordnet ist, wobei die Unterkante 26 jedes Rahmens mit der Unterkante 27 des jeweiligen Hebels fluchtet. Jeder Hebel 20, 21, 22 hat eine nahe seinem freien Ende 30 angeordnete Rastnase 31, welche die in Steckrichtung hintere Kante 32, 33, 34 jeder Karte 2, 3, 4 in ihrer Betriebsstellung hintergreift. Dabei umschließt die Rastnase gemäß der Figur die untere Ecke jeder Karte, so daß diese in ihrer Betriebsstellung gesichert ist. Jede Rastnase 31 läuft zum freien Ende 30 des Hebels 20, 21, 22 spitz zu und hat an ihrer zum freien Ende jedes Hebels weisenden Seite eine Riffelung 35.

Jeder Hebel 20, 21, 22 der Verriegelungseinrichtung 16 ist mit Hilfe der Haltevorrichtung 23 in seine in der Figur gezeigten Verriegelungsstellung vorgespannt. Die Haltevorrichtung 23 ist eine Feder 36, deren eines Ende 37 am Hebel 20 angreift und deren anderes Ende 38 z.B. am Rahmen 6 des Halters 5 befestigbar ist, sich also am Halter 5 abstützt. In der Figur 2 ist die als Feder 36 ausgebildete Haltevorrichtung 23 lediglich bei dem linken äußeren Hebel 20 dargestellt; die beiden anderen Hebel 21, 22 haben aber eine gleiche Haltevorrichtung. Die Feder 36 ist gemäß der Figur 2 als Drehfeder ausgebildet; sie kann aber auch eine Zug- oder Druckfeder sein. Die Drehfeder ist im Bereich der Schwenkachse 24 jedes Hebels angeordnet, wobei am Hebel 20, 21, 22 und am Halter 5 bzw. der betreffenden Schiebeführung ein jeweils ein Ende 37, 38 der Drehfeder abstützender Zapfen 40, 41 angebracht ist. Der an jedem Hebel befestigte Zapfen kann auch eine einstückig damit verbundene Platte sein (siehe Figur). Die Federenden können auch einfach in am Hebel sowie am Halter vorgesehene Bohrungen eingesetzt werden.

Gemäß der Figur 2 ist dem Hebel 20 ein Schalter 42 zugeordnet, der die Verriegelungs- oder Entriegelungsstellung des Hebels erfaßt und diese einer nicht gezeigten Datenverarbeitungsanlage anzeigt. Das von dem Schalter abgegebene Signal kann beispielsweise auch zur Kassenelektronik einer Registrierkasse übertragen werden. Ein solcher Schalter kann aber auch den anderen Hebeln 21, 22 zugeordnet sein. Der Schalter 42 hat an seiner Oberseite einen schwenkbaren Bügel 43, der an der Unterseite 27 des Hebels 20 anliegt. Der Bügel 43 ist in Richtung auf den Hebel 20 mit Hilfe einer nicht gezeigten Drehfeder vorgespannt. Die Drehfeder des Bügels 43 kann auch so stark ausgebildet sein, daß sie den Hebel in seiner in der Figur 2 dargestellten Betriebsstellung hält. Auch in diesem Fall kann die als Feder 36 ausgebildete Halteeinrichtung 23 entfallen. Statt des Schalters 42 kann auch eine andere Meldevorrichtung für die Stellung des Hebels, z.B. eine Lichtschranke, vorgesehen sein.

Der Schalter kann ein Mikroschalter sein, der beispielsweise der Kassenelektronik einer Registrierkasse das Vorhandensein und/oder die bevorstehende Entnahme einer Karte anzeigt. Eine solche Karte kann beispielsweise ein Firmenausweis eines Benutzers, z.B. eines Kassierers sein.

Zusätzlich zu den als einrastbare Hebel 20, 21, 22 ausgebildeten Riegeln ist der Verriegelungseinrichtung 16 eine abschließbare, gemäß der Figur 2 auf zwei Hebel 21, 22 wirkende Sperreinrichtung 44 mit einem Schieberiegel 47 zugeordnet, der aus einer eine Bewegung des betreffenden Hebels verhindernden Sperrstellung (siehe Figur) in eine eine Bewegung des Hebels freigebende Freigabestellung und umgekehrt bewegbar ist. An der Sperreinrichtung kann ein Schalter ähnlich dem Schalter 42 angebracht sein, der deren Ver- bzw. Entriegelungszustand anzeigt. Die an den Riegeln 20, 21, 22 angebrachten Schalter können dann entfallen.

Dazu ist z.B. in einer, nicht gezeigten Ausführungsform ein mit einem Schloß versehener Schwenkarm vorgesehen, der bei der Verriegelungsstellung des jeweiligen Riegels in dessen Schwenkbereich bzw. aus diesem heraus bewegbar ist. Ein solcher Schwenkarm kann jedem einzelnen hebelförmigen Riegel zugeordnet sein. Der Schwenkarm kann dabei eine Form haben, die dem mit einem Schloß 45 versehenen Schwenkarm 46 in der Figur 2 ähnelt. Bei dieser Ausführungsform ist das Schloß etwa im Bereich zwischen den freien Enden der Hebel derart angeordnet, daß die Oberkante des Schlosses nahe der durch die Unterkante des Hebels verlaufende Ebene angeordnet ist. In der Sperrstellung ist der Schwenkarm derart in den Schwenkbereich des in seiner Verriegelungsstellung gehaltenen Hebels verschwenkt, daß der Schwenkarm nunmehr etwa horizontal angeordnet ist.

Bei der in Figur 2 gezeigten Ausführungsform umfaßt die Sperreinrichtung 44 den Schieberiegel 47 mit einem Nokkenprofil mit jeweils einzelnen Riegeln 21, 22 zugeordneten Nocken 49, die bei der Verriegelungsstellung des jeweiligen Riegels in dessen Schwenkbereich bzw. zur Entriegelung aus diesem heraus bewegbar sind. Die Bewegung des Nockenprofils 47 erfolgt über eine als verschiebbarer Nockenschieber ausgebildete Betätigungsvorrichtung 48, die den mit dem Schloß 45 versehenen Schwenkarm 46 und einen mit dem Nockenprofil 47 verbundenen Stift 51 hat, an dem der Schwenkarm 46 angreift. Der Schwenkarm 46 hat an seinem freien, d.h. dem Schloß 45 gegenüberliegenden Ende eine längliche Ausnehmung 50. Die längliche Ausnehmung kann auch als Langloch oder Führungsschlitz ausgebildet sein. Der mit dem Nockenprofil 47 verbundene Stift 51 greift in die längliche Ausnehmung 50 des Schwenkarmes 46 ein. Durch eine Schwenkbewegung des Schwenkarmes in Richtung des Pfeils A erfolgt eine Verschiebebewegung des Stiftes 51 und damit des Nockenprofils 47 in Richtung des Pfeils B. Die Verschiebebewegung des Nockenprofils 47 kann durch Langlöcher 52 begrenzt sein, die in dem Schieberiegel ausgebildet sind und in die nicht dargestellte Führungszapfen eingreifen.

Gemäß der Figur 2 ist der Schieberiegel 47 gleichzeitig auf die Hebel 21, 22 wirkend angeordnet und ausgebildet, wobei das Nockenprofil im Anschluß an den jeweiligen Nocken 49 eine Ausnehmung 53, 54 bildet, deren jeweilige Breite wenigstens der Breite des freien Endes jeden Riegels (Hebels) und deren Tiefe wenigstens der Eingriffslänge von Hebel und Karte bzw. dem Verriegelungsweg des betreffenden Riegels, genauer der Eingriffslänge zwischen der Rastnase 31 und der jeweiligen Karte entspricht. Gemäß der dargestellten Ausführungsform wirkt das Nockenprofil nicht auf den linken Hebel 20, so daß dieser unabhängig von der Stellung des Nokkenprofils betätigt, d.h. in seine Entriegelungsstellung verschwenkt werden kann. Das Nockenprofil 47 kann aber auch auf sämtliche Hebel wirkend ausgebildet sein, so daß in diesem Fall drei Nocken 49 und Ausnehmungen vorgesehen sein müssen.

Die Sperreinrichtung 44 ist gemäß den beiden zuvor beschriebenen Ausführungsformen quer zur Steckrichtung der Karten schwenkbar (erste Ausführungsform) oder verschiebbar (zweite Ausführungsform), wobei die Schwenkachse des Schwenkarmes 46 im Fall der zweiten Ausführungsform unterhalb derjenigen der ersten Ausführungsform sowie unterhalb des Nockenprofils 47 liegt. Dadurch bewegt sich der Schwenkarm 46 im Falle einer Verschiebebewegung des Nockenprofils 47 in Richtung des Pfeils B aus einer gemäß der Figur nach links geneigten, durchgezogenen über seine obere Totpunktlage in eine nach rechts geneigte, gestrichelte Stellung.

Gemäß der Figur 2 ist der rechten Karte 4 ein weiterer Riegel 55 zugeordnet, der im wesentlichen ähnlich den als Hebel 20, 21, 22 ausgebildeten Riegeln aufgebaut und dem Hebel 22 gegenüberliegend am Halter 5 angeordnet ist. Im Unterschied zu den Riegeln 20, 21, 22 hat der Riegel 55 in seinem mittleren Bereich einen einstükkig damit verbundenen, etwa rechteckigen und mit einer Durchgangsbohrung (nicht gezeigt) versehenen Vorsprung 56, der einem kurzen Schenkel 57 eines L-förmigen Winkels 60 mit geringem Abstand gegenübersteht, wobei der kurze Schenkel 57 des Winkels 60 ebenfalls eine Durchgangsbohrung 62 hat, die mit der Durchgangsbohrung des Vorsprungs 56 fluchtet. In diese Bohrungen ist ein nicht dargestellter Verriegelungsbolzen einsetzbar, der gegen unberechtigte Entnahme durch eine Plombe gesichert werden kann. Der lange Schenkel 61 des Winkels 60 ist mit dem Halter 5 unlösbar verbunden.

Die einzelnen Rahmen des Halters können symmetrisch in bezug auf ihre in Steckrichtung verlaufende Längsachse ausgebildet sein, so daß jeder Rahmen auch an seinem oberen Ende eine der Ausnehmung 25 vergleichbare Ausnehmung aufweisen kann. Dementsprechend können auch an diesem Ende Zapfen oder Stifte zum Halten eines Endes einer Feder vorgesehen sein. In Verbindung mit den Abstandhaltern 13 ergibt sich somit ein Bausatz für eine Vorrichtung zum Aufnehmen von Speicherkarten. Es ist ferner möglich, die Hebel 20, 21, 22 nicht an der Unterseite, wie in der Figur gezeigt, sondern an der Oberseite des Halters (in dieser Stellung kann die Halteeinrichtung entfallen) vorzusehen und die verplombte Verbindung zwischen dem Hebel 55 und dem Winkel 60 beispielsweise an der Unterseite des Halters 5 anzubringen. Auch ist es denkbar, die Hebel 20, 21, 22 und die vorgenannte verplombte Verbindung auf derselben Seite des Halters 5 anzuordnen oder die verplombte Verbindung wenigstens einem der Hebel 20, 21,22 zusätzlich zuzuordnen. An der Unter- und/oder Oberseite jedes Rahmens 6, 7, 8 kann zwischen der Schwenkachse 24 und ihrem zum Hebel weisenden Ende ein sich vertikal erstreckender Vorsprung angeordnet sein, der in eine entsprechend geformte Ausnehmung des Hebels eingreifen kann und die vertikale Schwenkbewegung jedes Hebels derart führt, daß horizontale Verschiebungen in Richtung des Pfeils B oder in umgekehrter Richtung ausgeschlossen sind. Der Einfachheit halber sind in der Zeichnung Kontaktstellen bzw. Signalübermittlungselemente der Karten und der zugeordneten Rahmen weggelassen. Der verplombte Riegel 55 kann an einer Karte vorgesehen sein, die zusätzlich durch einen der Hebel 20, 21, 22 gesichert ist, wobei die Möglichkeit besteht, einen dieser zuletzt genannten Hebel außerdem durch die Sperreinrichtung 44 zu sichern. Der weitere Riegel 55 mit der Verplombung 62 kann aber auch an einer Speicherkarte vorgesehen sein, die lediglich mit Hilfe eines nicht durch die Sperreinrichtung 44 zusätzlich gesicherten Hebels, wie z.B. des Hebels 20, verriegelt ist. Die Sperreinrichtung kann ebenso wie die Riegel bzw. Hebel auch an der Oberseite des Halters angeordnet sein. Die einzelnen Hebel 20, 21, 22 können im Bereich ihrer Schwenkachse 24 beispielsweise mit einem in herkömmlicher Weise gesicherten Bolzen am Halter 5 befestigt sein.

Nachfolgend wird der Betrieb der Vorrichtung zum Aufnehmen von Speicherkarten näher beschrieben.

Zunächst wird der Schieberiegel 47 mit dem Nockenprofil über einen Schlüssel 63 und den Schloßriegel 46 in Richtung des Pfeils B so weit verstellt, bis auch der Hebel 22 aus seiner in der Figur 2 gezeigten Verriegelungsstellung in seine Entriegelungsstellung verstellt werden kann. Zu diesem Zeitpunkt ist der weitere Riegel 55 noch nicht mit dem Winkel 60 verplombt. Anschließend wird die Karte 4 in den Rahmen 8 des Halters 5 eingesteckt, wobei der Hebel 22 und der Riegel 55 in ihre jeweilige Entriegelungsstellung verschwenkt werden. Bei vollständig eingesteckter Karte 4 schnappen der Hebel 22 bzw. der Riegel 55 zurück und legen damit ihre Verriegelungsstellung fest. Nun kann der weitere Riegel 55 von einer dazu berechtigten Person verplombt werden.

Dann wird die Karte 3 in die Schiebeführung des Rahmens 7 so weit eingesteckt, bis der Hebel 21 wieder in seine Verriegelungsstellung zurückschnappt. Durch nachfolgendes Drehen des Schlüssels 63 im Gegenuhrzeigersinn, d.h. entgegen dem Pfeil A, wird das Nokkenprofil und der gestrichelt dargestellte Schwenkarm 46 in Richtung des Pfeils C, d.h. nach links verschoben, bis die den Nocken 49 benachbarten Ausnehmungen 53, 54 zwischen den einzelnen Hebeln angeordnet sind. Die jeweiligen Nocken 49 sind nunmehr direkt unterhalb der Unterkante der Hebel 21 und 22 angeordnet, so daß eine Schwenkbewegung dieser Hebel in ihre Entriegelungsstellung nicht möglich ist. Der Schlüssel 63 kann nunmehr abgezogen und einer Aufsichtsperson ausgehändigt werden.

Die Speicherkarte 2 kann jederzeit in die Schiebeführung des Rahmens 6 eingesteckt und aus dieser durch einen nach unten gerichteten Druck auf das freie Ende des Hebels 20 zum Überwinden der Kraft der Haltevorrichtung 23 herausgezogen werden. Dieses Ausführungsbeispiel zeigt somit Karten, die unterschiedlich stark gesichert sind. Vorzugsweise wird eine solche Anordnung in Registrierkassen verwendet, wobei die nicht mit der Sperreinrichtung 44 gegen Entnehmen gesicherte Karte z.B. den Firmenausweis des Kassierers bzw. der Kassiererin darstellt (Firmenkarte). Über diese Karte meldet sich der Kassierer/die Kassiererin bei der Kasse an und setzt über die auf der Karte angeordneten integrierten Schaltkreise die Betriebsfunktionen der Kasse in Gang. Im Lauf der Kassiertätigkeit werden dann die von der betreffenden Kassierperson getätigten Abrechnungen auf der Karte gespeichert. Die zweite Schiebeführung 7 kann zur Aufnahme beispielsweise der Geschäftsführer-Karte dienen. Auf ihr werden Informationen, wie z.B. die Reihenfolge der Kassierer, Tagesumsätze etc., aufgezeichnet. Diese Karte kann nur entnommen werden, wenn die Sperreinrichtung mit Hilfe eines speziellen Schlüssels in ihre Freigabestellung verschoben werden kann. Der Schlüssel wird also lediglich dem Geschäftsführer ausgehändigt.

Die dritte schlitzförmige Führung 8 dient der Aufnahme z.B. einer "Memory-Fiscal-Karte", welche nur nach dem Öffnen der Verplombung 62 und, falls diese auch auf die Verriegelungseinrichtung für die Memory-Fiscal-Karte wirkt, zusätzlich durch ein Verschieben der Sperreinrichtung entnommen werden kann. Die Verplombung kann von dazu berechtigten Behörden, wie z.B. dem Finanzamt, vorgenommen werden. Es ist klar, daß auf den einzelnen Karten unterschiedliche Informationen abgespeichert werden können oder von den einzelnen Karten unterschiedliche Informationen bzw. Signale an eine diese Signale verarbeitende Anlage abgegeben werden können.

Soll eine der Karten 2, 3, 4 aus dem Halter 5 entnommen werden, so muß -ggf. nach Öffnen der Sperreinrichtung 44- der zugehörige Riegel 20, 21, 22, 55 außer Eingriff mit der Karte gebracht werden. Dabei wird der dem Riegel zugeordnete Schalter betätigt. Dieser bewirkt, daß eventuell in der Kassenelektronik laufende Datenverarbeitungsvorgänge ordnungsgemäß beendet und alle abzuspeichernden Informationen und/oder der Entnahmezeitpunkt auf der Karte abgespeichert werden. Da dies normalerweise im Bruchteil einer Sekunde geschieht, ist der Abspeichervorgang beendet, bevor die Signalübermittlungsverbindung zu der Karte durch deren Herausziehen aus dem Halter 5 unterbrochen wird.

Mit Hilfe der Verriegelung bzw. Sperrung ist eine ordnungsgemäße Abspeicherung aller Daten auch in verschiedenen Sicherheitsstufen möglich.

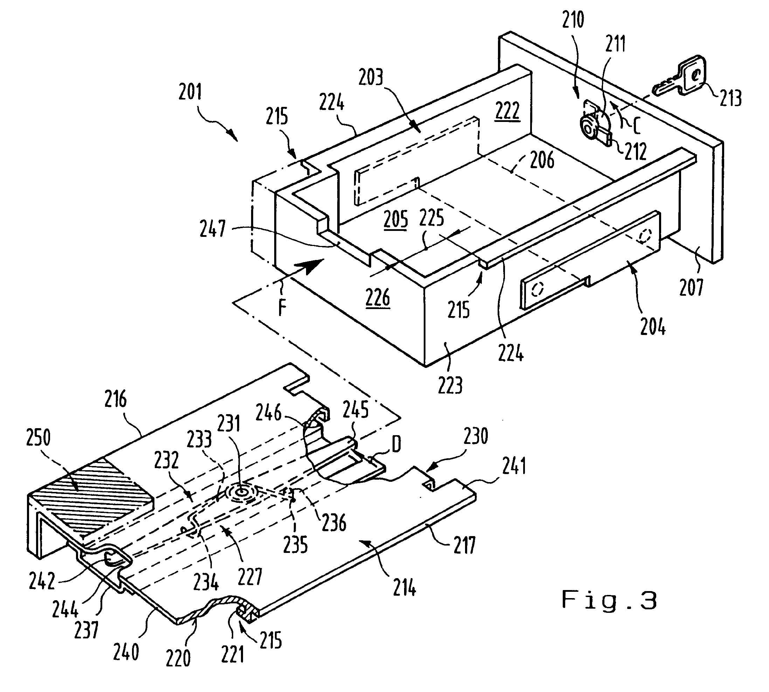

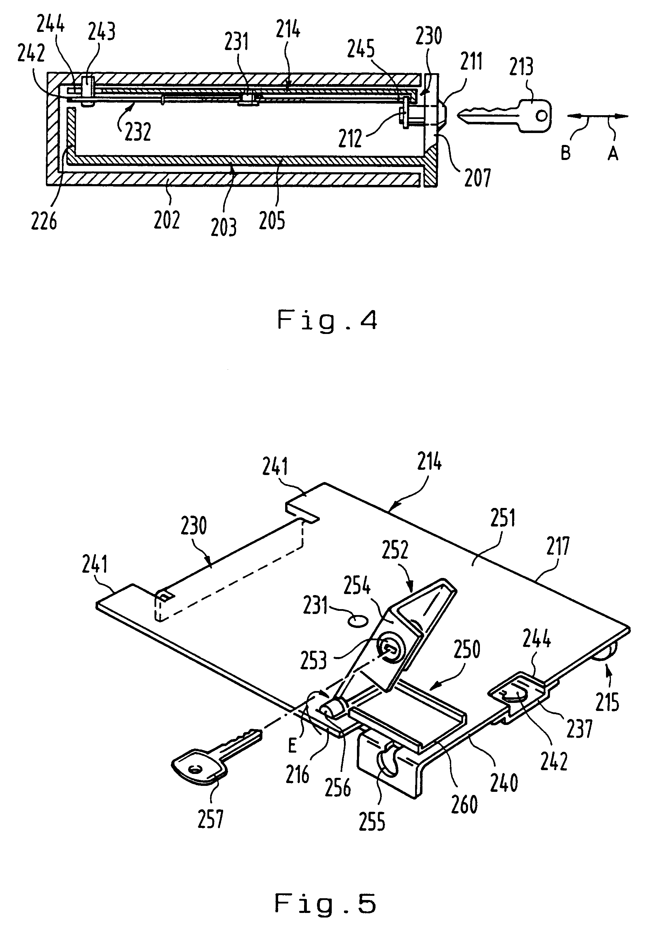

In Fig. 3 ist eine Kassenlade 201 für eine nicht näher gezeigte Registrierkasse in einer auseinandergezogenen Darstellung schematisch gezeigt. Die Kassenlade 201 besteht im wesentlichen aus einer in einem Ladengehäuse 202 in Aus- und Einfahrrichtung (siehe Pfeile A, B in Fig. 4) verschiebbar geführten Geldschublade 203, die derart angeordnet und ausgebildet ist, daß sie vor dem Bedienen der Registrierkasse, d.h. vor jeder Arbeitseinheit, in das Ladengehäuse 202 einschiebbar und nach beendetem Bedienen der Registrierkasse, d.h. nach jeder Arbeitseinheit, aus dem Ladengehäuse 202 entnehmbar ist.

Wie in Fig. 3 angedeutet, ist die Geldschublade 203 auf einer Halterung 204 abgestützt, die die Geldschublade teilweise umgreift. Gemäß Fig. 3 ist die Halterung ein U-förmiges Profil, in das die Geldschublade 203 eingesetzt oder eingeschoben ist. Die Halterung 204 ist auf nicht näher gezeigte Weise mit Führungsschienen verbunden, die in dem Ladengehäuse 202 befestigt sind und eine Verschiebebewegung der Halterung sowie der mit dieser verbundenen Geldschublade in Aus- und Einfahrrichtung (siehe Pfeile A und B in Fig. 4) ermöglichen. Um während des Bedienens der Registrierkasse eine Relativbewegung zwischen der Geldschublade 203 und der Halterung 204 zu verhindern, hat die Bodenwand 205 in ihrer in Fig. 3 nach unten weisenden Außenseite eine Ausnehmung 206, deren Breite die Breite der Halterung 204 in diesem Bereich geringfügig übersteigt. Dadurch ist sichergestellt, daß die Geldschublade 203 in ihrer auf der Halterung 204 abgestützten Stellung nicht relativ zur Halterung 204 verschoben werden kann. Das Einsetzen der Geldschublade 203 in die Halterung 204 ist besonders einfach in Fig. 3 von oben möglich. Geldschublade 203 und Halterung 204 können aber auch lösbar auf andere Weise, beispielsweise über Rastmittel, miteinander verbunden sein.

Es ist auch denkbar, daß die Geldschublade 203 fest mit der Halterung 204 verbunden ist und daß der eigentliche Behälter für die Geldaufnahme lose in die Geldschublade eingesetzt ist. Ein solcher Behälter ist allgemein als Geldeinsatz bekannt und deshalb nicht dargestellt.

Gemäß den Fig. 3 und 4 hat die Geldschublade 203 einen Deckel 214, der zwischen einer die Geldschublade 203 verschließenden Schließstellung (siehe Fig. 4) und einer die Geldschublade freigebenden Freigabestellung (vgl. auch Fig. 3) bewegbar und in seiner Schließstellung mit der Geldschublade 203 lösbar verriegelt ist. Dazu ist der Deckel 214 auf der Geldschublade 203 mittels einer Schiebeführung 215 verschiebbar geführt und mittels einer Verriegelungseinrichtung 210 mit der Geldschublade 203 verriegelbar (vgl. Fig. 4). Die Schiebeführung 215 besteht aus einem nahe jeder Seitenkante 216, 217 des Deckels 214 an dessen Unterseite 220 angebrachten L-förmigen Profil 221, das einen an dem oberen Ende jeder Seitenwand 222, 223 der Geldschublade 203 ausgebildeten Steg 224 umgreift. Die Stege 224 beginnen nahe der hinteren Wand 207 und enden um ein Maß 225 vor der in Einfahrrichtung B vorderen Wand 226 der Geldschublade 203. Bei Verwendung eines Geldeinsatzes sind die Stege 224 und die weiter unten beschriebenen Elemente 210, 211, 212 nicht an der Geldschublade 203 sondern an dem Geldeinsatz angebracht. Im folgenden wird auf das Ausführungsbeispiel mit Geldeinsatz nicht mehr eingegangen. Durch das Einschieben der Geldschublade 203 in das Ladengehäuse 202 ist der Deckel 214 mit dem Ladengehäuse 202 verbunden und durch das Herstellen der Verriegelung von diesem lösbar, wie nachstehend noch genauer beschrieben wird.

Der Deckel 214 ist mit Hilfe einer Rasteinrichtung 227 bei vollständig in das Ladengehäuse 202 eingeschobener Geldschublade 203 (vgl. Fig. 4) mit dem Ladengehäuse 202 verrastbar und hat eine Sperre 230, die ein vollständiges Herausziehen der Geldschublade 203 bei mit dem Ladengehäuse 202 verbundenem Deckel 214 verhindert. Gemäß den Fig. 3 und 4 ist die Rasteinrichtung 227 ein parallel zur Bewegungsrichtung (siehe Pfeile A und B in Fig. 4) des Deckels 214 sich erstreckender, in der Dekkelebene um eine am Deckel gelagerte Schwenkachse 231 schwenkbarer Rasthebel 232, der mit einer Feder 233 in seine in Fig. 3 gezeigte Raststellung, d. h. im Uhrzeigersinn, vorgespannt ist. Der Rasthebel 232 ist etwa in seiner Längsmitte über die Schwenkachse 231 mit dem Dekkel 214 verbunden. Gemäß Fig. 3 ist die Feder 233 eine Drehfeder, die im Bereich der Schwenkachse 231 angeordnet ist und deren eines Ende 234 an dem Rasthebel 232 angreift und deren anderes Ende 235 sich mittels eines Zapfens 236 am Deckel 214 abstützt. Die Feder kann aber auch eine an einem Ende des Rasthebels 232 sich abstützende Zug- oder Druckfeder sein.

Der Rasthebel 232 ist länglich ausgebildet und erstreckt sich an der Unterseite 220 des Deckels 214 nahezu über dessen gesamte Länge. Der Rasthebel ist von einer kanalförmigen Abdeckung 237 umgeben, die an der Unterseite 220 des Deckels 214 befestigt ist und sich vom vorderen Ende 240 des Deckels bis nahe zur Deckelhinterkante 241 erstreckt. Das in Einschiebrichtung des Deckels 214 vordere Ende 240 des Rasthebels 232 hat eine Rastnase 242, die in der in das Ladengehäuse 202 eingeschobenen Stellung des Deckels 214 (vgl. Fig. 4) einen am Ladengehäuse 202 gehaltenen Stift 243 hintergreift. Im Bereich der Rastnase 242 des Rasthebels 232 hat der Deckel 214 eine Ausnehmung 244, in der sich bei vollständig in das Ladengehäuse 202 eingeschobenem Dekkel der Stift 243 befindet.

Die Verriegelungseinrichtung 210 ist an der in Einfahrrichtung (siehe Pfeil B in Fig. 4) hinteren Wand 207 der Geldschublade 203 angebracht. Gemäß den Fig. 3 und 4 ist die Verriegelungseinrichtung 210 ein mit einem Schloß 11 versehener Schloßriegel 212, der zwischen einer eine Bewegung des Deckels 214 blockierenden Verriegelungs- und einer eine solche Bewegung freigebenden Entriegelungsstellung bewegbar ist. Bei der zuvor beschriebenen Ausführungsform kann der Schloßriegel 212 der Verriegelungseinrichtung 210 bei einer Drehung des Schlosses 211 mit Hilfe eines Schlüssels 213 um etwa 90° (siehe Pfeil C in Fig. 3) in eine nicht näher gezeigte Ausnehmung im hinteren Bereich des Deckels 214 eingreifen (gestrichelte Darstellung des in Fig. 3 nach oben verschwenkten Schloßriegels 212) oder die Sperre 230 hintergreifen.

Das in Einschiebrichtung hintere Ende 245 des Rasthebels 232 erstreckt sich bis nahe zur Deckelhinterkante 241. Die Verriegelungseinrichtung 210 ist auf das hintere Ende 245 des Rasthebels 232 wirkend angeordnet und ausgebildet, so daß der Schloßriegel 212 in seiner gemäß Pfeil C nach oben verschwenkten Verriegelungsstellung (in Fig. 3 gestrichelt dargestellt) das hintere Ende 245 des Rasthebels 232 beaufschlagen kann (siehe Pfeil D in Fig. 3). Dazu überragt das hintere Ende 245 des Rasthebels 232 das hintere Ende 246 der kanalförmigen Abdeckung 237 um ein geringes Maß. Dieses Maß entspricht wenigstens der Dicke des Schloßriegels 212.

Gemäß den Fig. 3 bis 5 ist die Deckelhinterkante 241 teilweise als zur Geldschublade 203 hin umgebogene Sperre 230 ausgebildet, deren Breite größer ist als der Abstand zwischen dem Deckel 214 und der Oberkante der Geldschublade 203. Gemäß den Fig. 3 und 5 ist die Dekkelhinterkante 241 im Bereich der Schiebeführung 215 nicht zur Geldschublade hin umgebogen, sondern dient bei auf der Geldschublade 203 geführtem Deckel 214 als Anschlag gegen die hintere Wand 207 der Geldschublade 203. An ihrem in Fig. 3 oberen Ende hat die vordere Wand 226 der Geldschublade 203 einen Rücksprung 247, dessen Länge und Tiefe wenigstens den entsprechenden Größen der kanalförmigen Abdeckung 237 entsprechen.

Bei einem anderen Ausführungsbeispiel (nicht genauer dargestellt) ist die Geldschublade 203 in ihrer in das Ladengehäuse 202 eingeschobenen Stellung mittels der Verriegelungseinrichtung 210 mit dem Ladengehäuse 202 verriegelbar. Der Schloßriegel 212 der Verriegelungseinrichtung 210 kann beispielsweise in eine nicht gezeigte Ausnehmung in der Unterseite der oberen Wand des Ladengehäuses 202 eingreifen.

Gemäß den Fig. 3 und 5 hat der Deckel 214 nahe seinem vorderen Ende 240 ein Aufnahmefach 250 für kartenförmige Schaltungsträger, insbesondere Karten (nicht näher gezeigt) mit integrierten Schaltkreisen, vornehmlich nach dem ISO-Standard 7816, wobei das Aufnahmefach 50 eine schwenkbar an der Oberseite 251 des Deckels 214 gelagerte Abdeckung 252 hat, die mit dem Deckel 214 mittels eines Schlosses 253 verschließbar ist (siehe Fig. 5). Die Abdeckung 252 ist L-förmig ausgebildet, wobei sich ein Schenkel 254 dieses L-Profils in vertikaler Richtung erstreckt und das Schloß 253 aufnimmt. Im Bereich des vorderen Endes 40 des Deckels 214 ist die Seitenkante 216 winklig, in Fig. 5 nach unten hin abgebogen und hat eine Öffnung 255 für den nicht näher gezeigten Schloßriegel des Schlosses 253. Die Abdeckung 252 kann zum Halten einer nicht gezeigten Karte in dem Aufnahmefach 250 in Richtung des Pfeils E um ihre Schwenkachse 256 verschwenkt und bei parallel zur Oberseite 251 angeordneter Abdeckung 252 mittels eines Schlüssels 257 und des Schlosses 253 versperrt werden.

Das Aufnahmefach 250 hat bei geschlossener Abdeckung 252 an seinem dem vorderen Ende 240 des Deckels 214 nahen Ende 260 einen nicht näher dargestellten Schlitz, dessen Breite geringer ist als die Dicke der in dem Aufnahmefach angeordneten Karte, aber so groß ist, daß Kontaktelemente oder Signalübermittlungselemente einer nicht näher gezeigten, in dem Ladengehäuse 202 angeordneten Stiftleiste durch den Schlitz des Aufnahmefaches 250 in eine am vorderen Ende der Karte ausgebildete Kontaktaufnahme der Karte eingreifen können. Beim Einschieben des auf der Geldschublade 203 geführten Dekkels 214 in das Ladengehäuse 202 kontaktieren die Kontaktelemente automatisch mit der jeweiligen Kontaktaufnahme der Karte. Die Karten können als sogenannte Memory-Karten ausgebildet sein und beispielsweise die Daten des Kassierpersonals und die an der betreffenden Registrierkasse erzielten Tagesumsätze enthalten. Außerdem können der Wechselgeldinhalt der Geldschublade 203 und die Arbeitszeit des Kassierpersonals auf der Karte abgespeichert sein. Die Karte kann aber auch eine einfache Speicherkarte zum Abspeichern von Informationen sein. Vorzugsweise ist die Karte aber eine Chip-Karte (Karte mit integrierten Schaltkreisen), wobei diese mit der Steuerung der Registrierkasse zusammenwirken und besipielsweise die Betriebsfunktionen der Kasse einschalten usw..

Nachfolgend wird der Betrieb der Kassenlade für eine Registrierkasse näher beschrieben.

Ein nicht näher gezeigter kartenförmiger Schaltungsträger, z.B. eine Karte mit integrierten Schaltkreisen, wird in das auf der Oberseite 251 des Deckels 214 befindliche Aufnahmefach 250 so eingelegt, daß die Kontaktaufnahme der Karte zum Ende 260 des Aufnahmefaches weist. Die Abdeckung 252 des Aufnahmefachs 250 wird in Richtung des Pfeils E (siehe Fig. 5) verschwenkt, bis der nicht gezeigte Schloßriegel des Schlosses 253 in die Öffnung 255 eingreift und mit Hilfe des Schlüssels 257 so verdreht werden kann, daß das Aufnahmefach abgesperrt und die darin befindliche Karte gegen Entnahme gesichert ist.

Der Deckel 214 wird nun derart auf die Geldschublade 203 aufgesetzt, daß sich die Deckelhinterkante 241 etwa im Bereich des Maßes 225, also zwischen dem vorderen Ende der Schiebeführung 215 und der vorderen Wand 226 der Geldschublade 203 befindet. In dieser Stellung umgreift das L-förmige Profil 221 noch nicht die Stege 224 der Schiebeführung 215. Das hintere Ende 246 der kanalförmigen Abdeckung 237 befindet sich aber bereits etwa im Bereich des in der vorderen Wand 226 der Geldschublade 203 ausgebildeten Rücksprungs 247. In dieser Stellung des Deckels 214 kann auch das Wechselgeld in die Geldschublade eingelegt werden. Anschließend wird der Deckel in Richtung des Pfeiles F (siehe Fig. 3) soweit verschoben, bis die nicht umgebogene Deckelhinterkante 241 an der hinteren Wand 207 der Geldschublade anschlägt.

Falls gewünscht, kann der Schloßriegel 212 aus seiner in Fig. 3 gezeigten Stellung mit Hilfe des Schlüssels 213 in Richtung des Pfeils C soweit verschwenkt werden, bis das freie Ende des Schloßriegels 212 die als Sperre 230 ausgebildete Deckelhinterkante hintergreift. Das Schloß 211 kann so ausgebildet sein, daß der Schlüssel 213 auch in dieser den Rasthebel 232 vorzugsweise nicht beaufschlagenden Stellung von der Geldschublade 203 abgezogen werden kann. In dieser Stellung befindet sich der Deckel in seiner Sperrstellung und ist mit der Geldschublade 203 verriegelt.

Eine derartige Kassenlade kann einer Person des Kassierpersonals ausgehändigt werden, die diese vorzugsweise von oben auf die Halterung 204 einer nicht gezeigten Registrierkasse derart aufsetzt, daß die Halterung in der in der Bodenwand 205 vorgesehenen Ausnehmung 206 zu liegen kommt. Nunmehr wird die Geldschublade 203 mit ihrem Deckel 214 einschließlich der Halterung 204 in das Ladengehäuse 202 eingeschoben (vgl. Einfahrrichtung gemäß Pfeil B in Fig. 4), bis der Rasthebel 232 eine Schwenkbewegung zunächst im Gegenuhrzeigersinn, nachfolgend im Uhrzeigersinn um seine Schwenkachse 231 ausführt und den in dem Ladengehäuse 202 gehaltenen Stift 243 hintergreift. Gemäß Fig. 4 ist die Geldschublade in dieser Stellung vollständig in das Ladengehäuse 202 eingeschoben. Es ist aber auch möglich, daß die Geldschublade bei der Verrastung des Deckels 214 mit dem Ladengehäuse 202 nur teilweise in diese eingeschoben ist. Ferner ist denkbar, den Geldeinsatz anstatt mit dem Ladengehäuse mit der fest an der Registrierkasse montierten Geldschublade zu verrasten.

Durch eine Drehung des Schlüssels 213 entgegen dem Pfeil C (siehe Fig. 3) wird der Schloßriegel 212 in seine in Fig. 3 gezeigte durchgezogene Stellung überführt und die Geldschublade 203 für eine Verschiebebewegung in Aus- und Einfahrrichtung (siehe Pfeile A,B in Fig. 4) freigegeben. Beim Verrasten des Deckels mit dem Ladengehäuse greifen auch die Kontaktelemente einer nicht gezeigten Stiftleiste in eine oder mehrere den Kontaktelementen entsprechende Kontaktaufnahmen der betreffenden Karte ein, so daß die Registrierkasse für die betreffende Person betriebsbereit ist. Anschließend erfolgt die Bedienung der Registrierkasse wie in herkömmlicher Weise. Die als Sperre 230 ausgebildete, in Richtung der Geldschublade 230 umgebogene Deckelhinterkante 241 verhindert aber ein vollständiges Herausziehen der Geldschublade aus dem Ladengehäuse ohne den Dekkel 214.

Nach beendetem Bedienen der Registrierkasse für das betreffende Personal, d.h. also auch bei einem Wechsel der Kassierperson, schiebt diese die Geldschublade vollständig in das Ladengehäuse ein und verschwenkt den Schloßriegel 212 mit Hilfe des Schlüssels 213 in Richtung des Pfeils C bis in seine in Fig. 3 gezeigte gestrichelte Stellung, in welcher der Schloßriegel das hintere Ende 245 des Rasthebels 232 in Richtung des Pfeils D entgegen der Kraft der Feder 233 beaufschlagt, so daß sich der Rasthebel 232 im Gegenuhrzeigersinn um die Schwenkachse 231 bewegt und die Rastnase 242 den Stift 43 freigibt. Die Geldschublade 203 kann nun mitsamt ihrem Deckel 214 und der Halterung 204 aus dem Ladengehäuse 202 der Registrierkasse herausgezogen werden. Vorzugsweise wird der Schlüssel 213 vorher von der hinteren Wand 207 der Geldschublade abgezogen, wobei es möglich ist, daß der Schloßriegel aufgrund der Kraft der Feder 233 um ein geringes Maß entgegen der Richtung des Pfeils C verschwenkt und der Schlüssel erst in dieser Stellung des Schloßriegels 212 abgezogen werden kann. Es ist aber auch möglich, daß der Schlüssel 213 in der gestrichelten Stellung des Schloßriegels 212 abgezogen werden kann; der Rasthebel 232 kann in diesem Fall gegen den Schloßriegel vorgespannt sein.

Bei vollständig aus dem Ladengehäuse 202 herausgezogener Halterung 204 wird die Geldschublade mit ihrem in der Sperrstellung befindlichen Deckel aus der Halterung 204 gehoben und an einem sicheren Ort aufbewahrt. Gleichzeitig mit dem Herausziehen der Geldschublade mit dem dazugehörigen Deckel geraten auch die Kontaktelemente mit der Karte außer Eingriff, so daß sich die betreffende Kassierperson automatisch von der Registrierkasse abmeldet. Eine derartig ausgebildete Kassenlade ist einfach aufgebaut und trägt mit dazu bei, abrechnungstechnische Unstimmigkeiten zu vermeiden.

Die zuvor beschriebene Kassenlade kann besonders vorteilhaft eingesetzt werden, wenn sie einer bestimmten Person des Kassierpersonals zugeordnet wird. Jeder Person des Kassierpersonals ist dann eine eigene Geldschublade zugeordnet, die ausschließlich von dieser Person bedient wird. Bei einem Wechsel des Kassierpersonals entnimmt die eine Person ihre Geldschublade aus dem Ladengehäuse, während die andere Person ihre eigene Geldschublade in das Ladengehäuse einsetzt. Bei der Kassenabrechnung bemerkte Fehler in einzelnen Geldschubladen können somit unproblematisch der betreffenden Person zugeordnet werden, so daß es insbesondere dann weniger leicht zu abrechnungstechnischen Unstimmigkeiten des Personals kommen kann, wenn während einer Arbeitseinheit mehrere Personen die Registrierkasse bedient haben. Bei häufigem Wechsel des Kassierpersonals, sogenanntes Springen, auftretende abrechnungstechnische Fehler, z.B. bei der Herausgabe des Wechselgeldes aus der Geldschublade einer Registrierkasse, können damit nicht mehr zu Unstimmigkeiten zwischen den einzelnen Personen des Kassierpersonals führen.

## Patentansprüche

1. Durch einen Rechner steuerbares Gerät, umfassend wenigstens eine zur Aufnahme einer Chip-Karte (100) ausgelegte Aufnahmevorrichtung mit einer Kontaktanordnung (110,114) zum Verbinden einer Chip-Karte (100) mit anderen Komponenten des Gerätes, dadurch **gekennzeichnet,** daß der Rechner durch eine, wenigstens eine zentrale Prozessoreinheit (CPU), einen Lesespeicher (ROM), einen Arbeitsspeicher (RAM) und einen Ein-/Ausgabebaustein (I/O-Baustein) enthaltende Chip-Karte (100) gebildet ist, daß das Gerät eine fest installierte Leistungs- und Treiberelektronik (118) und eine fest installierte Stromversorgungseinheit (130) aufweist und daß die Kontaktanordnung Verbindungskontakte (110) zum Verbinden des I/O-Bausteins mit der Leistungs- und Treiberelektronik (118) umfaßt.

2. Gerät nach Anspruch 1, dadurch **gekennzeichnet,** daß das Gerät weitere Aufnahmevorrichtungen zur Aufnahme weiterer mit der Rechner-Chip-Karte (100) zusammenwirkender Chip-Karten (132, 134, 138) aufweist, und daß diese weiteren Aufnahmevorrichtung mit Kontaktanordnungen (117, 119; 121, 123) versehen sind, die mit der Aufnahmevorrichtung der Rechner-Chip-Karte (100) verbunden sind.

3. Gerät nach Anspruch 1 oder 2, dadurch **gekennzeichnet,** daß an das Gerät mit diesem zusammenwirkende Peripheriegeräte (120, 122, 124) anschließbar sind und daß wenigstens einzelne Aufnahmevorrichtungen für jeweils eine (138) der weiteren Chip-Karten eine Kontaktanordnung (125, 127) aufweisen, die direkt mit einem Peripheriegerät (120) verbunden ist.

4. Gerät nach einem der Ansprüche 1 bis 3, dadurch **gekennzeichnet,** daß den Aufnahmevorrichtungen Mittel (9, 45, 62) zum Sichern der jeweils eingesteckten Chip-Karten (100, 132, 134, 138) gegen Entnahme zugeordnet sind.

5. Gerät nach Anspruch 4, dadurch **gekennzeichnet,** daß unterschiedlichen Aufnahmevorrichtungen unterschiedlich starke Sicherungsmittel (9, 45, 62) zugeordnet sind.

6. Gerät nach einem der Ansprüche 1 bis 5, dadurch **gekennzeichnet,** daß es als Registrierkasse ausgebildet ist und daß eine (132) der weiteren Chip-Karten Daten zum Identifizieren und Anmelden einer Kassierperson und zum Einschalten der Betriebsfunktion der Registrierkasse trägt (Firmenkarte).

7. Gerät nach Anspruch 6, dadurch **gekennzeichnet,** daß eine (134) der weiteren Chip-Karten Daten zum Identifizieren eines den Kassierpersonen übergeordneten Geschäftsführers trägt und zum Speichern und Verarbeiten von für den Geschäftsführer relevanten Daten ausgelegt ist (Geschäftsführerkarte),

8. Gerät nach Anspruch 6 und 7, dadurch **gekennzeichnet,** daß eine (138) der weiteren Chip-Karten fiskalisch relevante Daten trägt und speichert (Memory fiscale).

9. Gerät nach einem der Ansprüche 6 bis 8, dadurch **gekennzeichnet,** daß ein Kartenhalter (5) mit mehreren Aufnahmevorrichtungen (6, 7, 8)vorgesehen ist, und daß jedem Aufnahmefach eine Verriegelungseinrichtung (20, 21, 22)zum Halten einer eingesteckten Karte (2, 3, 4) in ihrer eingesteckten Stellung zugeordnet ist.

10. Gerät nach Anspruch 9, dadurch **gekennzeichnet,** daß eine mit einer Schließeinrichtung (45) versehene Sperreinrichtung (44) zum Sperren der Verriegelungseinrichtungen (20, 21, 22) in ihrer Verriegelungsstellung vorgesehen ist.

11. Gerät nach Anspruch 10, dadurch **gekennzeichnet,** daß die Sperreinrichtung zur Sperrung bestimmter Verriegelungseinrichtungen (22, 55) mehrere unabhängige Einzelsperren (44, 61) umfaßt.

12. Gerät nach einem der Ansprüche 6 bis 11, mit einer Kassenlade, dadurch **gekennzeichnet,** daß eine Aufnahmevorrichtung (250) an der Kassenlade (201) ausgebildet ist.

13. Gerät nach Anspruch 12, dadurch **gekennzeichnet,** daß die Kassenlade (201) mit einem beim Ausfahren der Kassenlade im Kassengehäuse verbleibenden Dekkel (214) versehen ist, wobei das Aufnahmefach (250) am Deckel ausgebildet ist.

## Claims

1. Computer-controllable apparatus, comprising at least one receptacle designed for receiving a chip card (100), with a contact arrangement (110, 114) for connecting a chip card (100) to other components of the apparatus, characterised in that the computer is formed by a chip card (100) containing at least one central processing unit (CPU), a read-only memory (ROM), a main memory (RAM) and an input/output component (I/O component), in that the apparatus has permanently installed power and drive electronics (118) and a permanently installed power supply unit (130) and in that the contact arrangement comprises connecting contacts (110) for connecting the I/O component to the power and drive electronics (118).

2. Apparatus according to Claim 1, characterised in that the apparatus has further receptacles for receiving further chip cards (132, 134, 138) interacting with the computer chip card (100), and in that these further receptacles are provided with contact arrangements (117, 119; 121, 123) which are connected to the receptacle of the computer chip card (100).

3. Apparatus according to Claim 1 or 2, characterised in that peripheral devices (120, 122, 124) interacting with the apparatus can be connected to said apparatus and in that at least individual receptacles have for in each case one (138) of the further chip cards a contact arrangement (125, 127) which is connected directly to a peripheral device (120).

4. Apparatus according to one of Claims 1 to 3, characterised in that the receptacles are assigned means (9, 45, 62) of protecting the respectively inserted chip cards (100, 132, 134, 138) against removal.

5. Apparatus according to Claim 4, characterised in that different receptacles are assigned protective means (9, 45, 62) providing different degrees of protection.

6. Apparatus according to one of Claims 1 to 5, characterised in that it is designed as a cash register and in that one (132) of the further chip cards carries data for identifying and logging on a cashier and for switching on the operational function of the cash register (company card).

7. Apparatus according to Claim 6, characterised in that one (134) of the further chip cards carries data for identifying a manager superior to the cashiers and is designed for storing and processing data of relevance to the manager (manager's card).

8. Apparatus according to Claims 6 and 7, characterised in that one (138) of the further chip cards carries and stores fiscally relevant data (fiscal memory).

9. Apparatus according to one of Claims 6 to 8, characterised in that a card holder (5) is provided with a plurality of receptacles (6, 7, 8), and in that each receiving compartment is assigned a locking mechanism (20, 21, 22) for holding an inserted card (2, 3, 4) in its inserted position.

10. Apparatus according to Claim 9, characterised in that a blocking device (44), provided with a locking device (45), is provided for blocking the locking mechanisms (20, 21, 22) in their locking position.

11. Apparatus according to Claim 10, characterised in that the blocking device for blocking particular locking mechanisms (22, 55) comprises a plurality of independent individual blocks (44, 61).

12. Apparatus according to one of Claims 6 to 11, with a register drawer, characterised in that a receptacle (250) is formed on the register drawer (201).

13. Apparatus according to Claim 12, characterised in that the register drawer (201) is provided with a cover (214) remaining in the register housing when the register drawer is moved out, the receiving compartment (250) being formed on the cover.

## Revendications

1. Appareil commandable par un ordinateur, comprenant au moins un dispositif de réception agencé pour recevoir une carte à puce (100) et comportant un dispositif de contact (110, 114) pour relier une carte à puce (100) à d'autres composants de l'appareil, caractérisé par le fait que l'ordinateur est formé par une carte à puce (100) contenant au moins une unité centrale à processeur (CPU), une mémoire de lecture (ROM), une mémoire de travail (RAM) et un module d'entrée/sortie (module I/O), que l'appareil possède un système électronique de puissance et d'attaque (118) installé de façon fixe et une unité d'alimentation en courant (130) installée de façon fixe, et que le dispositif de contact comprend des contacts de liaison (110) servant à réunir le module (I/O) au système électronique de puissance et d'attaque (118).

2. Appareil suivant la revendication 1, caractérisé par le fait que l'appareil comporte d'autres dispositifs de réception permettant de loger d'autres cartes à puce (132, 134, 138), qui coopèrent avec la carte à puce formant ordinateur (100), et que ces cartes comportent d'autres dispositifs de réception pourvus de dispositifs de contact (117, 119; 121, 123), qui sont reliés au dispositif de réception de la carte à puce formant ordinateur (100).

3. Appareil suivant la revendication 1 ou 2, caractérisé par le fait qu'à l'appareil peuvent être raccordés des dispositifs périphériques (120, 122, 124) coopérant avec ledit appareil et qu'au moins des dispositifs individuels de réception pour respectivement l'une (138) des autres cartes à puces comportent un dispositif de contact (125, 127), qui est raccordé directement à un dispositif périphérique (120).

4. Appareil suivant l'une des revendications 1 à 3, caractérisé par le fait qu'aux dispositifs de réception sont associés des moyens (9, 45, 62) servant à empêcher tout retrait des cartes à puces (100, 132, 134, 138) respectivement enfichées.

5. Appareil suivant la revendication 4, caractérisé par le fait que des moyens de blocage (9, 45, 62) appliquant des forces différentes, sont associés à différents dispositifs de réception.

6. Appareil suivant l'une des revendications 1 à 5, caractérisé par le fait qu'il est agencé à la manière d'une caisse enregistreuse et que l'une (132) des autres cartes à puce porte des données pour identifier et signaler un caissier et pour activer la fonction de service de la caisse enregistreuse (carte de société).

7. Appareil suivant la revendication 6, caractérisé par le fait que l'une (134) des autres cartes à puce porte des données servant à identifier un gérant de rang supérieur à celui des caissiers et est agencée de manière à mémoriser et traiter des données concernant le directeur (carte de gérant).

8. Appareil suivant les revendications 6 et 7, caractérisé par le fait que l'une (138) des autres cartes à puce portent et mémorisent des données importantes du point de vue fiscal (Memory fiscale).

9. Appareil suivant l'une des revendications 6 à 8, caractérisé par le fait qu'il est prévu un porte-cartes (5) comportant plusieurs dispositifs de réception (6, 7, 8) et qu'à chaque casier récepteur est associé un dispositif de verrouillage (20, 21, 22) servant à maintenir une carte enfichée (2, 3, 4) dans sa position enfichée.

10. Appareil suivant la revendication 9, caractérisé par le fait qu'un dispositif de blocage (44), équipé d'un dispositif de fermeture (45), est prévu pour le blocage des dispositifs de verrouillage (20, 21, 22) dans leur position verrouillée.

11. Appareil suivant la revendication 10, caractérisé par le fait que le dispositif de blocage comporte plusieurs organes de blocage individuels indépendants (44, 61), qui servent à bloquer des dispositifs de verrouillage déterminés (22, 55).

12. Appareil suivant l'une des revendications 6 à 11, comportant un tiroir-caisse, caractérisé par le fait qu'un dispositif de réception (250) est formé dans le tiroir-caisse (201).

13. Appareil suivant la revendication 12, caractérisé par le fait que le tiroir-caisse (201) est équipé d'un couvercle (214), qui subsiste dans le logement de la caisse lorsque le tiroir-caisse est ressorti, le casier récepteur (250) étant formé sur le couvercle.
